**Europäisches Patentamt**

**European Patent Office**

**Office européen des brevets**

(19)

(11) Veröffentlichungsnummer: **0 250 765 B1**

(12) # EUROPÄISCHE PATENTSCHRIFT

(45) Veröffentlichungstag der Patentschrift: 06.03.91

(51) Int. Cl.⁵: **G01N 21/63**

(21) Anmeldenummer: **87106222.0**

(22) Anmeldetag: **29.04.87**

(54) Spektralanalysenvorrichtung an einem Konverter.

(30) Priorität: 27.05.86 DE 3617869

(43) Veröffentlichungstag der Anmeldung:
**07.01.88 Patentblatt 88/01**

(45) Bekanntmachung des Hinweises auf die
Patenterteilung:
**06.03.91 Patentblatt 91/10**

(84) Benannte Vertragsstaaten:
**AT BE DE FR GB IT LU NL SE**

(56) Entgegenhaltungen:
EP-A- 0 176 625
DE-A- 2 138 540
DE-A- 3 413 589

**PATENT ABSTRACTS OF JAPAN, Band 8, Nr.
278 (P-322)[1715], 19. Dezember 1984; & JP-
A-59 145 932**

(73) Patentinhaber: **Hoesch Stahl Aktiengesellschaft
Rheinische Strasse 173
W-4600 Dortmund 1(DE)**

(72) Erfinder: **Koch, Karl-Heinz, Dr.-Ing.
Auf dem Mühlenhofe 41
W-4600 Dortmund 30(DE)**
Erfinder: **Meininghaus, Fritz, Dr.
Helenenbergweg 28
W-4600 Dortmund 50(DE)**
Erfinder: **Kopineck, Hermann Josef, Prof. Dr.
rer. nat.
Wildbannweg 36
W-4600 Dortmund 50(DE)**
Erfinder: **Tappe, Wilhelm, Dr.
Wulfskamp 23
W-4600 Dortmund 16(DE)**

## Beschreibung

Die Erfindung betrifft eine Spektralanalysenvorrichtung an einem Konverter, bei der eine von außen durch die Wand des Konverters bis zur Schmelze verlaufende Öffnung mit einem an der Außenwand des Konverters angebrachten Spektralanalysator und mit einer Vorrichtung zur Erzeugung eines Laserstrahls optisch verbunden ist, bei der ein Edelgas oder Gasgemisch von außen durch eine Rohrleitung zur Öffnung geführt ist, bei der die Öffnung einen Querschnitt von nicht größer als 1 cm² aufweist, mit einem Edelgas oder einem gegenüber der Schmelze inerten Gasgemisch gefüllt ist und durch die das Edelgas oder Gasgemisch mit einem derartigen Überdruck zuführbar ist, daß pro Minute mindestens 10 g Gas pro mm² Querschnittsfläche ausströmen bei der die optische Verbindung im Bereich der Öffnung aus zwei verschiebbaren Lichtleitern besteht, von denen der eine mit der Erzeugungsvorrichtung für den Laserstrahl und der andere mit dem Spektralanalysator optisch verbunden ist und bei der an den Spektralanalysator ein auf die Auswertung programmierter Computer angeschlossen ist. Eine solche Spektralanalysenvorrichtung ist aus der DE-OS 21 38 540 bekannt. Diese Vorrichtung hat den Nachteil, daß die Öffnung einen relativ großen Durchmesser besitzen muß, damit eine ausreichend große Menge an Strahlung durch die Öffnung dringt, da die Entfernung zum Apparat für die Spektralanalyse wegen der etwa 1 m dicken Auskleidung des Konverters mit feuerfestem Material relativ weit ist.

Diese große Öffnung wird an ihrem Rand durch den flüssigen Stahl nach kurzer Betriebszeit so stark angegriffen, daß sie im Durchmesser immer größer wird, wodurch die Auskleidung des Konverters eine Fehlstelle erhält und dieser unbrauchbar wird. Es hat sich herausgestellt, daß solche Auswaschungen bei im Durchmesser sehr kleinen Öffnungen und bei hohen Ausstömgeschwindigkeiten des kühlenden inerten Gases nicht entstehen. Eine solche Öffnung mit extrem geringerem Durchmesser hat gegenüber der in der DE-OS 21 38 540 beschriebenen Öffnung den Nachteil, daß durch diese nur sehr wenig der zu analysierenden Strahlung hindurchgeht. Die Strahlungsintensität wird auch dadurch stark verringert, daß das mit hoher Geschwindigkeit ausströmende inerte Gas, die durch den Laserstrahl gebildete und zur Strahlung angeregte Dampfschicht sofort verdünnt und wegwäscht.

Eine Spektralanalysenvorrichtung mit kleiner Öffnung ist aus der DE-OS 34 13 589 bekannt. Mit dieser Vorrichtung wird die Schmelze nur an einer Stelle analysiert. Da die zusammensetzung, besonders am Anfang des Blasvorganges, noch örtlich unterschiedlich ist, sind mit der Vorrichtung nur grobe Anhaltswerte zu messen. Außerdem besteht die Gefahr, daß die Öffnung sich zusetzt, wodurch die Spektralanalysenvorrichtung unwirksam wird.

Es ist die Aufgabe der Erfindung, mit nur einer Spektralanalysenvorrichtung, an örtlich verschiedenen Stellen des Konverters Messungen durchzuführen, wobei der Querschnitt der Öffnung sehr klein ist und außerdem eine ausreichende Strahlung zum Spektralanalysenapparat geleitet wird.

Diese Aufgabe wird durch die im Anspruch 1 beschriebene Vorrichtung gelöst. Weitere Ausgestaltungen sind in den Ansprüchen 2 und 3 beschrieben.

Damit der Laserstrahl durch kleine Einstellungsungenauigkeiten nicht gegen die Wand de Öffnung strahlt, ist es von Vorteil, wenn der ihn in die Öffnung einleitende Lichtleiter genau in der Längsachse der Öffnung liegt und die die zu anlaysierte Strahlung leitenden Lichtleiter um diesen herum angeordnet sind.

Die Lichtleiter werden durch die Verstellvorrichtung immer soweit zurückgezogen, daß ihre Temperatur nicht soweit ansteigt, daß sie beschädigt werden. Die äußerst geringe zu analysierende Lichtintensität läßt sich nicht ohne weiteres sicher und genau analysieren. Sie erfordert vielmehr besondere Anordnungen.

So ist es beispielsweise zweckmäßig, das hintere Ende des Analysenlichtleiters so auszubilden, daß es den Eingangsspalt eines Spektralapparates bildet, der am oder im Boden des Konverters angebracht wird, um möglichst kurze Lichtleitwege zu erreichen. Als besonders vorteilhaft hat es sich erwiesen, einen im zugehörigen UV-Bereich wirksamen Monochromator zu verwenden, dem den einzelnen Linien zugeordnete Lichtverstärkergeräte z. B. Multichannelplat es zugeordnet sind. Da die interessierenden Elementanteile sehr klein sein können, so sind auch die zugehörigen Strahlungsintensitäten besonders klein. Es kann daher zweckmäßig sein, innerhalb des Lichtleitersystems eine elektrooptische Verstärkung des spektralen Nutzsignals mit an sich bekannten Mitteln vorzunehmen. Da die analytische Überwachung einer Stahlschmelze während der Erzeugung in einem LD-Konverter bereits mit der Analyse von relativ wenigen Elementen auskommt, (z. B. C, S, T, Si) da viele der charakteristischen Linien im UV-Bereich liegen, ist es besonders vorteilhaft, die spektrale Messung dieser Linienmöglichst nahe der Strahleneintrittsstelle durchzuführen. Dabei ist es weiterhin vorteilhaft, daß im Verlauf des das empfangene Spektrallicht leitenden Lichtleitersystems ein oder mehrere schmalbandige analysierende Elemente, wie Interferenzfilter mit zugehörigen Lichtmeßsystemen, vorzugsweise Fotodetektoren angeordnet sind.

Ein Beispiel der Erfindung wird mit Hilfe der Fig. und 2 näher erläutert.

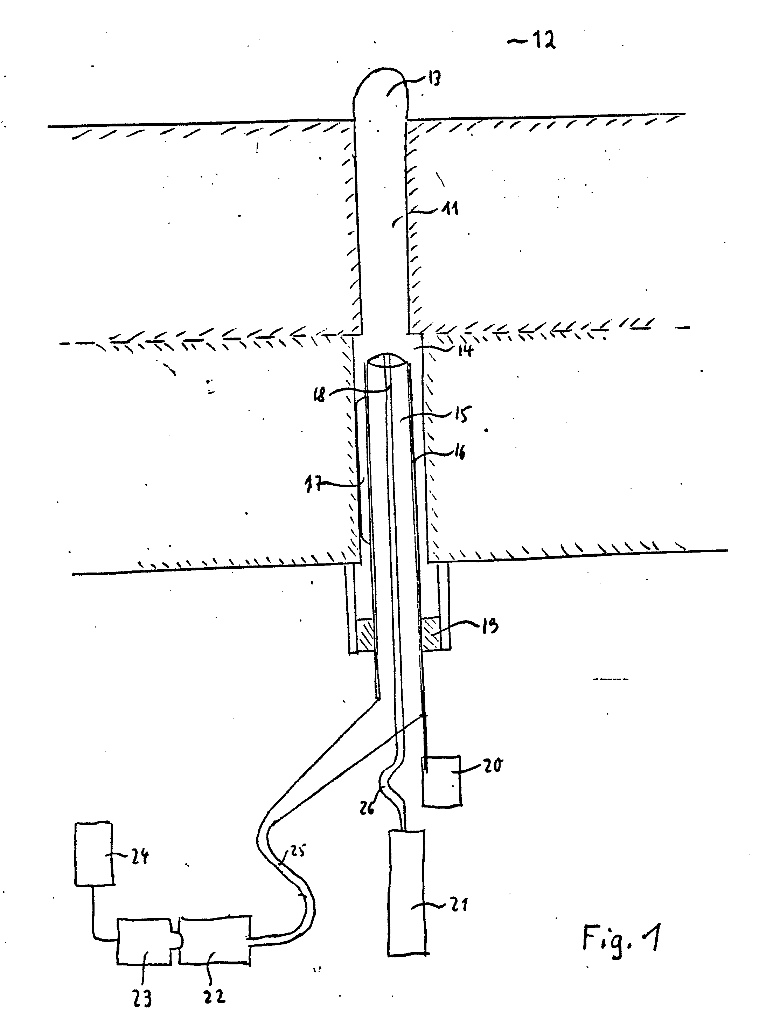

In der Fig. 1 ist ein Teil des Bodens eines Konverters dargestellt, in dem sich die Öffnung 11 befindet. Im oberen Raum 12 der Schmelze wird durch das ausströmende inerte Gas ein in etwa halbkugelförmiger freier Raum 13 gebildet. Die Öffnung 11 ist in ihrem unteren Teil 14 verbreitert. Die Öffnung besteht aus einem Stahlrohr, das in die feuerfeste Masse des Konverters dicht eingebettet ist. Im unteren Teil 14 der Öffnung ist der Lichtleiter 15 eingebaut. Dieser ist von einem dünnwandigen, innen verspiegelten Rohr 16 umgeben. Am Rohr 16 sind 3 bis 4 abstützende Rippen 17 angebaut, die an der Wandung des unteren Teils der Öffnung 14 geführt sind.In der Mitte des Lichtleiters 15 ist ein Lichtleiter 18 zum Einstrahlen des Laserstrahles eingebaut. Das Innere der Öffnung 11 und 14 ist durch eine Dichtung 19 gegenüber der äußeren Atmosphäre abgedichtet. Das Rohr 16 mit den Lichtleitern 15, 18 ist durch den Antrieb 20 schrittweise oder kontinuierlich aus der Öffnung 11 und 14 herausfahrbar zum Zwecke der Anpassung des Brennpunktes des Lasers bei sich im Betrieb verringernder Ausmauerung. Der Lichtleiter 18 ist zum Erzeugungsgerät 21 des Laserstrahls und der Lichtleiter 15 zum Analysierapparat 22 geführt. Am Analysierapparat 22 ist das Multichannelplatesystem 23 angebaut, dessen Ausgang den Lichtintensitäten der Spektrallinien entsprechende Ströme an den Computer 24 liefert, der aus diesen Strömen mit Hilfe eines geeigneten Programmes die Anteile der Beimengungen des Stahles errechnet. Bei einer anderen Ausführungsform sind die Lichtleiter an den Stellen 25 und 26 unterbrochen. An der Stelle 26 wird das Licht des Lasers über einen wie eine Weiche funktionierenden beweglichen Spiegel zu Lichtleitern umgeleitet, die zu anderen ebenfalls für Meßzwecke benutzte Öffnungen führen. Die von diesen Öffnungen ankommende Strahlung kann ein bei 25 eingebauter ebenfalls beweglicher Spiegel in den zum Analysierapparat 22 führenden Lichtleiter einspiegeln.

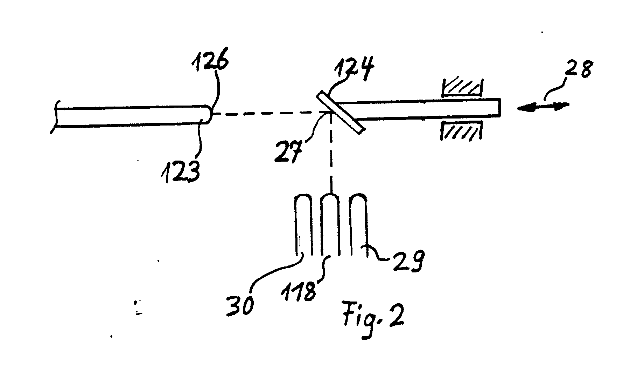

Das Prinzip eines solchen beweglichen Spieges ist in der Fig. 2 dargestellt.

Der z. B. vom Erzeugungsgerät 21 des Laserstrahles durch den Lichtleiter geleitete Laserstrahl verläßt diesen durch die Linse 23 im Punkt 126 und trifft den Spiegel 124 im Punkt 27 und wird zum Lichtleiter 118 reflektiert. Beim Verschieben des Spiegels 124 in die Richtung en 28 wird der reflektierte Strahl zu den Lichtleitern 29 oder 30 geworfen. Diese Lichtleiter 29 oder 30 führen zu anderen im Boden des Konverters befindlichen Öffnungen. Die von diesen Öffnungen durch Lichtleiter ankommende Strahlung kann in der gleichen Weise in den zum Analysierapparat führenden Lichtleiter eingespiegelt werden. Es muß dann allerdings der Spiegel 124 von einem Gehäuse umgeben werden, das zur Vermeidung von Absorptionsverlusten luftleer ist oder mit dem Edelgas gefüllt ist.

Der Analysierapparat funktioniert normalerweise in herkömmlicher Weise mit einem Prisma oder Gitter. Als vorteilhaft hat sich herausgestellt, das Austrittsende des Lichtleiters als Spalt-Eintrittsspalt des Analysiergerätes auszubilden. Es ist aber auch möglich, daß die gesamte Strahlung in mehrere Zweige aufgeteilt wird und jeder Zweig mit einem schmalbandigen Filter versehen wird, der nur das gewünschte spektrale Licht durchläßt. Dieses wird wiederum elektro-optisch verstärkt und wie beschrieben weiterverarbeitet.

**Ansprüche**

1. Spektralanalysenvorrichtung an einem Konverter, bei der eine von außen durch die Wand des Konverters bis zur Schmelze (12) verlaufende Öffnung (11) mit einem an der Außenwand des Konverters angebrachten Spektralanlysator (22) und mit einer Vorrichtung (21) zur Erzeugung eines Laserstrahls optisch verbunden ist, bei der ein Edelgas oder Gasgemisch von außen durch eine Rohrleitung zur Öffnung (11) geführt ist, bei der die Öffnung (11) einen Querschnitt von nicht größer als 1 cm² aufweist, mit einem Edelgas oder einem gegenüber der Schmelze inerten Gasgemisch gefüllt ist und durch die das Edelgas oder Gasgemisch mit einem derartigen Überdruck zuführbar ist, daß pro Minute mindestens 10 g Gas pro mm² Querschnittsfläche ausströmen, bei der die optische Verbindung im Bereich der Öffnung aus zwei verschiebbaren Lichtleitern (15, 18) besteht, von denen der eine mit der Erzeugungsvorrichtung für den Laserstrahl und der andere mit dem Spektralanalysator (22) optisch verbunden ist und bei der an den Spektralanlysator (22) ein auf die Auswertung programmierter Computer (24) angeschlossen ist, dadurch gekennzeichnet, daß mit dem Spektralanalysator (22) und der Erzeugervorrichtung (21) für den Laserstrahl mehrere durch die Wand des Konverters gehende Öffnungen (11) optisch verbunden sind, daß die optische Verbindung von den Öffnungen bis zur Laser-Erzeugungsvorrichtung (21) bzw. zum Spektralanalysator (22) im wesentlichen aus Lichtleitern besteht und daß durch eine optische Umschaltvorrichtung (24) eine wahlweise optische Verbindung (15, 18 118) zu bzw. von einer bestimmten Öffnung herstellbar ist.

2. Spektralanalysenvorrichtung nach Anspruch 1, dadurch gekennzeichnet, daß als optische Umschaltvorrichtung dicht vor den Stirnwänden von Lichtleitern sitzend ein beweglicher Spiegel (124) angebracht ist.

3. Spektralanalysenvorrichtung nach den Ansprüchen 1 und 2, dadurch gekennzeichnet, daß der Lichtleiter für den Laserstrahl in der jeweiligen Öffnung (11) zentrisch liegt und weniger als 20% der Querschnittsfläche der jeweiligen Öffnung (11) ausfüllt und daß um diesen Lichtleiter (18) herum in kreisringförmiger Anordnung Lichtleiterfasern (15) für die zu analysierende Strahlung angeordnet sind.

## Claims

1. Spectral analysis device on a converter, in which an opening (11) extending from outside through the wall of the converter as far as the molten mass (12) is optically connected to a spectral analyser (22), which is disposed on the outer wall of the converter, and to a device (21) for generating a laser beam, in which an inert gas or gas mixture is conducted from outside through a pipe to the opening (11), in which the opening (11) has a cross section not greater than 1 cm², is filled with an inert gas or a gas mixture which is inert with respect to the molten mass, and through which the inert gas or gas mixture can be supplied with such an excess pressure that at least 10g of gas per mm² cross sectional area flow out per minute, in which the optical connection in the region of the opening comprises two displaceable light guides (15, 18), one of which is optically connected to the generating device for the laser beam and the other is optically connected to the spectral analyser (22), and in which there is connected to the spectral analyser (22) a computer (24) programmed for evaluation, characterised in that a plurality of openings (11) passing through the wall of the converter are optically connected to the spectral analyser (22) and the generating device (21) for the laser beam, the optical connection from the openings to the laser generating device (21) or the spectral analyser (22) substantially comprises light guides, and an optionally optical connection (15, 18, 118) to or from a particular opening can be established through an optical switch-over device (24).

2. Spectral analysis device as in claim 1, characterised in that, as the optical switch-over device, a movable reflector (124) is provided which is seated closely in front of the end walls of light guides.

3. Spectral analysis device as in claims 1 and 2, characterised in that the light guide for the laser beam lies centrically in the respective opening (11) and fills less than 20% of the cross sectional area of the respective opening (11), and light guide fibres (15) for the radiation to be analysed are disposed around these light guides (18) in a circular ring-shaped arrangement.

## Revendications

1. Appareil d'analyse spectrale pour un convertisseur, dans lequel une ouverture (11) traversant la paroi du convertisseur depuis l'extérieur jusqu'au contenu en fusion (12) est reliée optiquement à un appareil d'analyse spectrale (22) monté sur la paroi externe du convertisseur, et à un dispositif (21) pour produire un rayon laser, dans lequel un gaz rare ou un mélange gaz est introduit depuis l'extérieur, par une conduite tubulaire, dans l'ouverture (11), dans lequel l'ouverture (11) a une section non supérieure à 1 cm², est remplie d'un mélange gazeux inerte vis-à-vis de la masse en fusion, et à travers laquelle le gaz rare ou le mélange gazeux est conduit sous une pression telle qu'une quantité égale au moins à 10 grammes de gaz s'écoule par minute pour une section de 1 mm², dans lequel la liaison optique dans la région de l'ouverture se fait par deux câbles à fibres optiques (15, 18) pouvant glisser, dont l'un est relié optiquement au dispositif pour produire un rayon laser, et l'autre est relié optiquement à l'analyseur de spectre (22), et dans lequel un calculateur (24) progammé pour l'interprétation est relié à l'analyseur de spectre, caractérisé en ce que plusieurs ouvertures (11) traversant la paroi du convertisseur sont reliées optiquement à l'analyseur de spectre (22) et au dispositif (21) pour produire le rayon laser, en ce que la liaison optique des ouvertures au dispositif pour produire le rayon laser (21), respectivement à l'analyseur de spectre (22), consiste essentiellement en câbles à fibres optiques, et en ce que la liaison optique (15, 18, 118) peut être établie au choix avec une ouverture définie, grâce à un dispositif de commution optique (24).

2. Appareil d'analyse spectrale selon la revendication 1, caractérisé en ce qu'un miroir mobile (124) servant de dispositif de commutation optique est disposé de manière étanche devant les faces d'extrémité des câbles à fibres optiques.

3. Appareil d'analyse spectrale selon les revendications 1 et 2, caractérisé en ce que le câble à fibres optiques pour le rayon laser est disposé au centre de l'ouverture (11) correspondante, et remplit moins de 20% de la section de l'ouverture (11) correspondante, et en ce que les fibres (15) du câble à fibres optiques (18) pour le rayonnement à analyser sont disposées en cercle autour de ce câble à fibres optiques.

Fig. 1

Fig. 2